# DEMANDE DE BREVET EUROPEEN

(11) **EP 1 806 460 A1**
(43) Date de publication de la demande: **11.07.2007**
(21) Numéro de dépôt: 07300706.4
(22) Date de dépôt: 08.01.2007
(51) Int. Cl.: E04B 5/40, E04B 5/02, E21D 11/10

(54) **Elément de construction armé**

(30) Priorité: 06.01.2006 FR 0650058
(71) Demandeur: SOCIETE CIVILE DE BREVETS MATIERE, 15000 Aurillac (FR)
(72) Inventeur: MATIERE, Marcel, 15000, AURILLAC (FR)
(74) Mandataire: Michelet, Alain

(57) **Abrégé**

L'invention a pour objet un élément de construction constitué d'un panneau en béton armé (1) dans lequel est noyée une armature de renforcement comportant au moins une nappe d'armature principale s'étendant le long d'une face externe tendue (11) de l'élément (1) et sur laquelle est fixée une armature interne (3) de solidarisation avec le béton, s'étendant dans l'épaisseur de l'élément (1), ce dernier étant réalisé, après la pose de l'armature de renforcement, par coulée de béton sur une paroi mince continue (2) formant un coffrage perdu.

Conformément à l'invention la paroi mince (2) formant le coffrage perdu, s'étend le long de la face tendue (11) de l'élément (1) et constitue en même temps la nappe d'armature principale de l'élément (1), la nature et l'épaisseur de ladite paroi mince (2) étant déterminées de façon à résister aux contraintes de traction engendrées par les efforts appliqués sur l'élément (1) sans risque de décollement du béton.

L'invention s'applique à la réalisation d'éléments en forme de dalle ou coque, ou de conduites tubulaires et permet aussi le revêtement interne d'une galerie de circulation de fluide.

## Description

L'invention a pour objet un élément de construction armé et résistant, réalisé en une matière moulée, en particulier du béton, dans laquelle est noyée une armature de renforcement.

La technique du béton armé est connue depuis très longtemps pour la réalisation de pièces de toutes sortes telles que dalles, coques ou poutres soumises, en particulier, à des efforts de flexion, mais on réalise aussi de cette façon des conduites de transport de fluide, en particulier de grand diamètre.

D'une façon générale, on réalise tout d'abord une armature métallique dite cage de ferraillage, qui, dans le cas de pièces préfabriquées, est placée dans un moule dont le fond forme un coffrage pour la coulée du béton à l'état fluide afin d'y noyer la cage de ferraillage, l'ensemble étant solidarisé ensuite par le durcissement du béton.

Dans la technique dite du béton banché, l'armature est placée entre deux parois de coffrage qui sont retirées après le durcissement du béton.

Dans certains cas, cependant, il est intéressant de conserver la paroi ayant servi de coffrage, par exemple pour assurer l'étanchéité ou sceller dans le béton une paroi constituant la face externe de la pièce.

Une telle technique dite de coffrage perdu est connu depuis très longtemps et, par exemple, le document US-A-775,927 datant de 1904, décrit déjà une technique de réalisation de plancher dans laquelle le béton est coulé sur une paroi mince formant un coffrage perdu servant également de cintre pour la coulée et le durcissement du béton. A cet effet, cette paroi mince est ondulée de façon à pouvoir être posée entre deux appuis en supportant le poids du béton pendant son durcissement.

Cette paroi ondulée est simplement solidarisée avec le béton par des bandes formant des étriers de liaison s'étendant dans l'épaisseur du plancher. Un tel plancher n'est donc pas prévu pour résister à des charges importantes, d'autant plus que les efforts transversaux dits "poussée au vide" peuvent provoquer un léger décollement du béton. En outre, une paroi ondulée ne peut pas résister à des efforts de traction dans le sens transversal qui risqueraient également de provoquer un décollement du béton.

Il est donc préférable, pour réaliser un élément de construction capable de résister aux efforts de flexion résultant des charges appliquées, de noyer dans le béton une cage d'armature métallique calculée de façon classique, pour résister aux efforts de traction engendrés par les charges appliquées sur la pièce alors que le béton résiste aux efforts de compression, la liaison entre le béton et l'armature permettant un transfert des efforts de l'un à l'autre des deux matériaux associés en raison de leur adhérence qui peut, d'ailleurs, être améliorée en utilisant, par exemple, des barres crantées.

Généralement, un élément de construction en béton armé comporte donc au moins une nappe d'armature sensiblement parallèle à une face externe de la pièce et solidarisée avec le béton par une armature interne enrobée dans celui-ci.

Dans le cas habituel d'une pièce, par exemple en forme de poutre ou de panneau ayant deux faces externes écartées l'une de l'autre, l'armature comporte, habituellement, deux nappes sensiblement parallèles à chaque face de la pièce et reliées par des étriers, l'ensemble étant noyé dans le béton.

L'armature est réalisée, habituellement, en acier et est donc sensible à l'oxydation. C'est pourquoi, normalement, chaque nappe d'armature doit être maintenue écartée de la face externe correspondante de la pièce par une couche de béton permettant d'assurer la protection de l'armature contre l'humidité. Cependant, il est difficile d'éviter une légère fissuration de la face externe de la pièce qui entraîne des venues d'eau au contact du métal avec un risque d'oxydation et, par conséquent, d'éclatement du béton, ce qui augmente les venues d'eau et peut conduire à la ruine de la pièce.

C'est pourquoi la réglementation impose l'existence d'une épaisseur minimale d'enrobage, normalement 30 mm, entre une armature métallique et la face de parement correspondante de la pièce.

Habituellement, une cage de ferraillage est constituée de deux nappes d'armature constituées de barres rondes et reliées entre elles par des étriers ou des épingles formant une armature interne constituée de fers de plus faible diamètre entourant les barres principales.

Pour maintenir la distance minimale d'enrobage requise, il faut donc positionner avec précision les armatures à l'intérieur de la pièce moulée, en utilisant des écarteurs prenant appui sur le coffrage, mais il faut tenir compte du diamètre des étriers qui entourent les barres.

Cette distance minimale d'enrobage, qui doit être maintenue sur les deux faces de la pièce, augmente l'épaisseur de celle-ci alors que l'épaisseur utile, permettant d'assurer la résistance de la pièce, correspond seulement à la distance entre les deux nappes d'armature.

Il est avantageux, cependant, de réduire autant que possible l'épaisseur des pièces en béton, en particulier, dans les techniques de préfabrication lourde dans lesquelles on réalise à l'avance des pièces d'assez grandes dimensions qui doivent être manipulées par des engins de levage. D'autre part, la quantité de béton utilisée représente une part importante du coût d'une pièce et il est avantageux de chercher à la réduire en conservant la même résistance.

A cet effet, le même inventeur a déjà proposé, dans la demande de brevet EP 1 191 163 A, une nouvelle technique de réalisation d'une cage de ferraillage qui permet notamment de réduire l'épaisseur globale d'une pièce mais présente aussi d'autres avantages.

Dans cette technique, les barres d'armatures ne sont pas constituées, comme habituellement, de fers ronds mais de bandes plates de section rectangulaire ayant une face large parallèle à la face de parement correspondante de la pièce. Chaque bande plate présente une section transversale équivalente à celle d'une barre ronde calculée pour résister aux efforts appliqués mais sa forme rectangulaire permet de fixer facilement, sur sa face interne, par soudure, les fers formant l'armature interne et constitués, eux-mêmes, avantageusement, de bandes plates. Ainsi, il n'est pas nécessaire que de tels étriers entourent les barres principales et l'on peut donc diminuer la distance d'enrobage et, par conséquent, l'épaisseur globale de la pièce.

On avait déjà proposé, dans le document US-A-4,181,556 de réaliser une pièce composite en forme de panneau comportant une armature constituée de deux feuilles métalliques parallèles dans lesquelles sont découpées des languettes qui sont déformées de façon à assurer la liaison entre les deux feuilles, à la manière de deux caillebotis emboîtés l'un dans l'autre, l'ensemble étant noyé dans une matrice constituée d'un produit coulable à l'état semi liquide de façon à enrober les deux feuilles parallèles, l'élément de paroi ainsi réalisé devenant rigide et résistant, après durcissement de la matrice.

Une technique de ce genre avait déjà été employée pour la réalisation de parois d'aéronefs à la fois légères, rigides et isolantes, mais on pourrait difficilement l'appliquer à la réalisation de pièces en béton armé.

La technique décrite, en revanche, dans la demande brevet précédente EP 1 191 163, est parfaitement applicable à la réalisation d'un élément de construction en béton armé car l'armature comporte également deux nappes constituées de barres entrecroisées reliées par des étriers et dont les caractéristiques structurelles et dimensionnelles, en particulier la section transversale peuvent être déterminées en utilisant les formules habituelles de calcul du béton armé qui permettent, en tenant compte notamment, de la limite élastique de l'acier et de la résistance à la compression du béton, de calculer la section d'acier nécessaire dans la nappe d'armature principale qui s'étend le long de la face externe tendue de la pièce, compte tenu de la distance entre cette nappe principale et la ligne neutre. En effet, la largeur et l'épaisseur des bandes plates utilisées comme armatures principales peut être équivalente à la section transversale totale des barres rondes utilisées dans la technique habituelle.

Un autre avantage de cette technique nouvelle réside dans le fait qu'une bande plate à section rectangulaire présente un périmètre bien supérieur à celui d'une ou deux barres rondes ayant une section transversale équivalente, le rapport pouvant être, par exemple, de 1,6. Il en résulte que l'adhérence entre l'armature et le béton, qui dépend, précisément, du périmètre, est augmentée dans les mêmes proportions qui correspondent sensiblement à l'avantage apporté, dans le béton armé, par l'utilisation de barres crantées ou de fers TOR.

Ainsi, l'adhérence entre les barres d'armature et le béton, dont dépend le transfert des efforts de traction, est sensiblement la même pour des bandes plates que pour des fers crantés.

Or, on sait que, lorsque la pièce est soumise à des efforts de flexion importants, les barres de la nappe d'armature principale placées à une faible distance de la face tendue, ont tendance à s'allonger et, du fait que les parties crantées, légèrement espacées, sont bloquées par rapport au béton, il en résulte, à leur niveau, l'apparition de fissures qui, à la longue, peuvent provoquer des venues d'eau et la corrosion de l'armature.

Lorsque, au contraire, on utilise des bandes plates de la façon décrite dans le document EP 1 191 163, l'effet d'adhérence entre l'armature principale et le béton reste réparti sur toute la longueur de l'armature et le risque de fissuration est moindre, une pièce ainsi réalisée étant relativement souple.

Cependant, même si le risque de fissuration est diminué, le béton d'enrobage ne peut pas assurer une étanchéité absolue lorsque le risque de venue d'eau est important, en particulier dans le cas de conduites de transport de liquide ou bien chaque fois que l'élément de construction, par exemple mur ou plancher, est placé dans une atmosphère humide. Bien entendu, le risque est encore accru dans le cas de conduites ou de réservoirs contenant des produits nocifs et corrosifs.

De même dans le cas de conduites de transport d'eau potable, tels que des aqueducs, la paroi en maçonnerie ou en béton de la galerie doit être recouverte d'un revêtement étanche tel qu'un enduit apte au transport d'eau potable, qui doit être nettoyé et parfois remplacé entièrement.

En outre, les aqueducs utilisés pour l'alimentation en eau des villes sont généralement assez anciens et, par suite de tassements différentiels, il peut apparaître des fissures qui provoquent des pertes d'eau importantes et un risque de pollution.

L'invention a donc pour objet de nouveaux développements de la technique décrite dans le brevet EP 1 191 163 qui permettent, d'une part, de faciliter la réalisation d'un élément de construction en béton armé, en utilisant un coffrage perdu et, d'autre part, d'en diminuer l'épaisseur. En outre, l'invention permet aussi d'assurer facilement une étanchéité dans le cas d'éléments placés dans un environnement humide ou corrosif ou bien pour le revêtement de galeries de circulation de fluide.

L'invention concerne donc, d'une façon générale, un élément de construction constitué d'un panneau en béton armé dans lequel est noyée une armature de renforcement comportant au moins une nappe d'armature principale s'étendant le long d'une face externe tendue de l'élément et sur laquelle est fixée une armature interne de solidarisation avec le béton, s'étendant dans l'épaisseur de l'élément, ce dernier étant réalisé, après la pose de l'armature de renforcement, par coulée de béton sur une paroi mince continue formant un coffrage perdu.

Conformément à l'invention, la paroi mince formant le coffrage perdu s'étend le long de la face tendue de l'élément et constitue en même temps la nappe d'armature principale de l'élément, la nature et l'épaisseur de ladite paroi mince étant déterminées de façon à résister aux contraintes de traction engendrées par les efforts appliqués sur l'élément sans risque de décollement du béton.

Dans un mode de réalisation préférentiel, la paroi mince formant la nappe d'armature principale et recouvrant la face externe tendue de la pièce, constitue une peau d'étanchéité continue.

Ainsi, alors que dans le brevet antérieur EP 1 191 163 cité plus haut, la cage d'armature, constituée de bandes minces, pouvait être réalisée de la même façon qu'une cage de ferraillage classique constituée de barres rondes noyées dans l'épaisseur de l'élément, selon l'invention, la nappe d'armature principale est maintenant placée au niveau de la face externe tendue de l'élément, de telle sorte que la distance d'enrobage est supprimée, l'épaisseur de l'élément étant, donc, encore diminuée.

Bien entendu, la paroi mince servant, ainsi, d'armature principale doit être capable de résister à la corrosion et, pour cela, elle peut être réalisée en un métal inoxydable ou à base de fibres de verre ou de carbone, ou bien recouverte d'un revêtement adéquat, l'augmentation de prix qui en résulte pouvant être compensée par les avantages apportés par l'invention.

L'invention permet la réalisation de pièces du genre dalle ou coque mais peut aussi s'appliquer avantageusement à la réalisation de conduites de circulation d'un fluide corrosif ou bien de transport d'eau potable et d'une façon générale, de toute structure étanche, par exemple coque de navire, péniche ou autre objet flottant.

En particulier, l'invention permet la réalisation d'un revêtement étanche dans une galerie maçonnée ou creusée dans le terrain naturel, ledit revêtement comportant une paroi mince introduite à l'intérieur de la galerie et séparée de la face interne de celle-ci par un espace dans lequel est injecté une matière moulable résistante telle que du béton, dans laquelle est noyée une armature interne de solidarisation.

Conformément à l'invention, les caractéristiques dimensionnelles et structurelles de la paroi mince et de l'armature interne sont déterminées de façon que l'ensemble du revêtement soit capable de résister aux efforts appliqués résultant des poussées externes, de la pression en service et de tassements différentiels éventuels de la galerie.

De façon particulièrement avantageuse, l'armature interne est constituée d'une pluralité de bandes ondulées parallèles à l'axe longitudinal (0) de la conduite et réparties autour de celui-ci, lesdites bandes étant soudées par au moins certains des sommets des ondulations sur la face interne de la paroi mince.

Dans un mode de réalisation préférentiel, le revêtement est constitué de tronçons successifs comportant chacun un panneau de paroi mince rectangulaire ayant une longueur correspondant à la longueur du tronçon et une largeur correspondant au périmètre de la conduite en section transversale. Ce panneau est d'abord posé à plat pour placer sur une face supérieure une armature interne comportant au moins une pluralité de bandes ondulées parallèles à un axe longitudinal du panneau et écartées l'une de l'autre, lesdites bandes étant soudées sur la face supérieure du panneau par au moins certains des sommets des ondulations; le panneau est ensuite surroulé pour former un tube de diamètre global inférieur à celui de la galerie les bandes ondulées étant tournées vers l'extérieur, et le panneau surroulé est introduit dans la galerie jusqu'à l'emplacement de pose et est déroulé de façon à prendre appui sur la face latérale par les sommets des bandes ondulées de la galerie; le panneau est alors soudé, d'une part le long de deux côtés longitudinaux venus en contact et d'autre part, le long d'un côté transversal extrême, avec le côté extrême correspondant du dernier tronçon déjà posé, et une matière moulable telle que du béton est injectée dans l'espace entre la paroi mince et la face latérale de la galerie, afin de noyer l'armature interne et de solidariser l'ensemble.

L'invention couvre également l'outillage utilisé pour la mise en oeuvre du procédé.

En effet, après la réalisation, à plat, du panneau muni des bandes ondulées constituant l'armature interne, ce panneau est surroulé au moyen d'un outil d'enroulement comprenant deux plateaux circulaires tournant autour d'un axe, sur lesquels sont fixées les extrémités d'un profilé ménagé sur l'un des cotés longitudinaux du panneau qui est enroulé sur plus d'un tour par rotation des plateaux autour de leur axe.

Ensuite, ce panneau surroulé est introduit dans la galerie au moyen d'un outil de déroulement comportant un arbre central portant, à ses extrémités, deux bras mobiles et monté rotatif sur deux paliers fixes en rotation, portant respectivement deux bras écartés dont l'écartement est un peu supérieur à la longueur d'un panneau, chaque paire de bras étant munie d'un organe de serrage ; l'outil de déroulement est alors enfilé dans le panneau surroulé de façon que les organes de serrage portés respectivement par les bras des paliers s'engagent sur les extrémités d'un profilé latéral placé sur le coté externe du panneau surroulé alors que les organes de serrage des bras de l'arbre central s'engagent sur les extrémités d'un profilé placé sur le coté interne du panneau surroulé, puis ledit panneau est placé dans sa position de pose par avancement de l'outil à l'intérieur de la galerie puis est déroulé par rotation des bras mobiles jusqu'à ce que le profilé interne dépasse la position du profilé externe, et l'on procède alors à la jonction étanche des bords en vis-à-vis du panneau le long des cotés latéraux, ainsi que des cotés transversaux adjacents, respectivement du dernier tronçon déjà posé et du nouveau tronçon.

Dans un mode de réalisation préférentiel, l'outil de déroulement est monté sur un chariot de transport tel qu'un chariot élévateur, de dimensions compatibles avec celles de la galerie à revêtir, afin d'être introduit à l'intérieur de celle-ci.

Mais l'invention couvre également d'autres applications et d'autres caractéristiques avantageuses qui apparaîtront dans la description qui va suivre de certains modes de réalisation particuliers donnés à titre d'exemple et représentés sur les dessins annexés.
La figure 1 est une vue partielle en coupe d'une pièce composite selon l'invention.
La figure 2 montre schématiquement, en perspective, la constitution d'une dalle selon l'invention.
La figure 3 montre, en coupe horizontale, la jonction entre deux panneaux formant une paroi de réservoir.
La figure 4 montre un autre mode de réalisation de la jonction entre deux panneaux de paroi.
La figure 5 est une vue partielle, en coupe, d'une paroi de conduite réalisée selon l'invention.
La figure 6 est une vue schématique, en coupe transversale, d'une galerie munie d'un revêtement selon l'invention.
La figure 7 est une vue en coupe transversale d'un panneau de revêtement posé à plat.
La figure 8 est une vue en coupe longitudinale du panneau de revêtement.
La figure 9 est une vue partielle, à échelle agrandie, du revêtement et de son armature.
La figure 10 montre schématiquement, en perspective, le processus d'enroulement d'un panneau de revêtement.
La figure 11 montre, en perspective, un panneau surroulé
La figure 12 montre le fonctionnement d'un outil de déroulement, en deux étapes successives.
La figure 13 est une vue de détail d'une mâchoire de serrage.
La figure 14 montre un chariot de transport équipé d'un outil de déroulement.
Les figures 15 et 16 illustrent schématiquement la pose d'un nouvel élément de paroi à l'intérieur d'une galerie.
La figure 17 est une vue de détail de l'emboîtement entre deux éléments consécutifs.
La figure 18 montre schématiquement la réalisation d'une jonction étanche entre deux éléments successifs de revêtement.

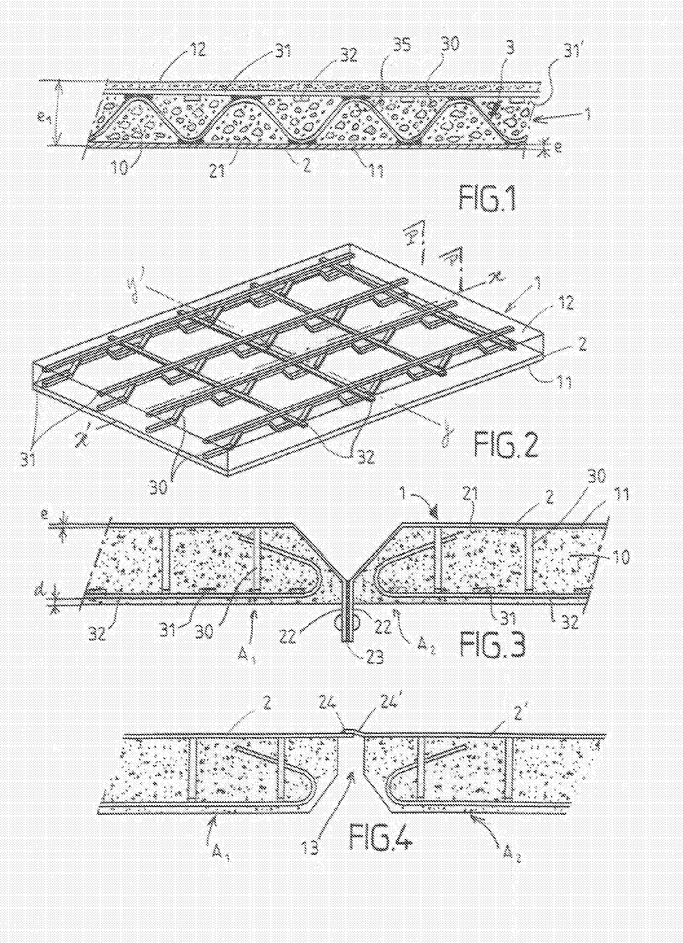

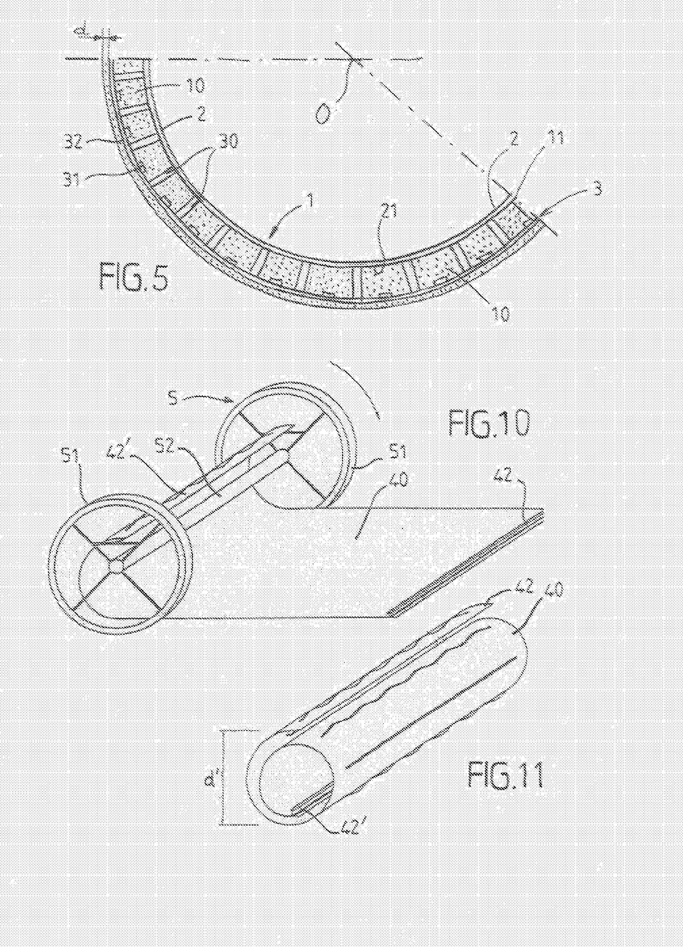

La figure 1 et la figure 2 montrent, respectivement en coupe longitudinale et en perspective, une dalle en béton armé 1, de forme rectangulaire, avec un axe longitudinal x'x et un axe transversal y'y. Comme habituellement, cette dalle est réalisée par moulage d'un béton 10 dans un coffrage et présente deux faces externes dites de parement 11 et 12 entre lesquelles s'étend une cage d'armature 3 noyées dans le béton 10.

Habituellement, la cage d'armature présente deux nappes de barres longitudinales et transversales, placées respectivement à une distance minimale d'enrobage des faces externes 11 et 12 et reliées entre elles par une armature interne constituées d' réalisés en fil de plus faible section, le nombre de barres de chaque nappe et leur section transversale étant déterminés par un calcul de résistance des matériaux en fonction des efforts à supporter par la dalle. En particulier, si la dalle est soumise à un effort de flexion sous l'effet, par exemple, d'une charge verticale, sa face inférieure 11 est tendue et sa face supérieure 12 est comprimée et les sections des nappes d'armature sont calculées en conséquence, en particulier pour la nappe inférieure soumise à des efforts de traction.

Comme on l'a exposé dans le brevet européen EP 1 191 163 du même inventeur, il est particulièrement avantageux d'utiliser, pour constituer les nappes d'armatures, des fers plats ayant une section rectangulaire aplatie équivalente à la section calculée pour les barres rondes mais dont la face large est parallèle à la face externe correspondante de la pièce, l'armature interne étant, en outre, constituée de bandes minces ondulées fixées alternativement, par leurs sommets, sur les faces internes des fers plats constituant les deux nappes. Une telle disposition permet de réduire sensiblement la distance d'enrobage entre chaque nappe de fers plats et la face externe correspondante de la pièce et, ainsi, l'épaisseur globale de celle-ci.

La dalle réalisée selon l'invention et représentée sur les figures 1 et 2, comporte également une cage d'armature 3 constituée de bandes minces mais diffère essentiellement de la disposition décrite dans le brevet EP 1 191 163 par le fait que la nappe d'armature principale, c'est-à-dire celle qui est placée, par rapport à la ligne neutre, du côté de la face tendue 11 de la pièce, est constituée d'une paroi mince métallique 2 recouvrant au moins une partie de la face externe 11 de la pièce 1 et ayant, par conséquent, une face interne 21 appliquée sur le béton 10 et sur laquelle sont fixées des bandes ondulées 30 constituant l'armature interne.

La paroi mince 2, qui s'étend sur toute la surface de la face tendue 11, constitue ainsi un coffrage perdu facilitant la réalisation de l'élément 1, en particulier si celui-ci est préfabriqué.

Sur le côté comprimé de la pièce 1, la nappe d'armature peut être constituée, comme dans la disposition décrite dans le brevet EP 1 191 163, de bandes minces longitudinales 31 reliées entre elles par des bandes transversales 32.

Les bandes ondulées 30 constituant l'armature interne sont soudées ou collées alternativement, par leurs sommets 34, 35, respectivement sur la face interne 21 de la paroi mince 2 et sur les faces internes 31' des bandes supérieures 31.

Selon l'invention l'épaisseur e de la paroi 2 est déterminée en fonction de sa largeur et compte-tenu de ses caractéristiques mécaniques, de façon à obtenir, en section transversale, une surface équivalente à celle résultant du calcul de résistance des matériaux et qui serait couverte par un certain nombre de barres d'armatures à section ronde, dans la technique classique ou bien de plusieurs bandes plates à section rectangulaire, dans la technique du brevet EP 1 191 163.

La paroi mince 2 remplit donc un double rôle. D'une part elle forme, de façon classique, un coffrage perdu pour la réalisation de la dalle et, d'autre part elle constitue la nappe d'armature principale résistant aux efforts de traction engendrés dans la partie inférieure de la dalle, sous l'effet des charges appliquées. En outre, cette paroi mince peut aussi constituer un revêtement protecteur et, éventuellement, une peau d'étanchéité, pour la face externe 11 de la dalle.

Comme le montre la figure 2, les bandes plates longitudinales 31 et les bandes ondulées 30 sont disposées, de façon classique, en plusieurs sections centrées dans des plans P parallèles à l'axe longitudinal x'x de la dalle et reliées entre elles par les bande transversales 32 s'étendant, de préférence, au-dessous des bandes longitudinales 31 et appliquées sur leurs faces internes 31'. En revanche, au niveau inférieur, aucune armature transversale n'est nécessaire puisque l'ensemble de la nappe d'armature principale est constitué par la paroi continue 2.

La disposition selon l'invention permet, en plaçant la nappe d'armature principale au niveau de la face externe 11 de la dalle, de supprimer l'épaisseur de béton correspondant à la distance minimale d'enrobage et, ainsi, de réduire l'épaisseur globale e1 de la poutre.

Par ailleurs, comme on l'a indiqué plus haut, l'utilisation de bandes plates comme barres d'armature longitudinales permet, à section équivalente, d'augmenter sensiblement le périmètre et d'avoir, ainsi, une adhérence du même ordre que celle d'une barre crantée.

Dans l'invention, la paroi mince 2 qui constitue la nappe d'armature principale, n'est en contact avec le béton que sur sa face interne 21 mais, du fait qu'elle s'étend sur toute la surface de l'élément, l'adhérence reste, encore, bien supérieure à celle des barres rondes utilisées de façon classique. Par conséquent, lorsque l'élément 1 est soumis à des efforts de flexion résultant par exemple de l'application d'une charge verticale, la paroi mince 2 recouvrant la face tendue 11 peut s'allonger légèrement sans risquer le décollement du béton, l'effet d'adhérence étant réparti sur toute la surface de la face tendue 11.

Dans ce cas, la face supérieure 12 de l'élément est comprimée, mais il est à noter que si les bandes ondulées 30 ne sont soudées sur l'armature supérieure 31 que par certains de leurs sommets 35, l'ensemble de l'élément peut se déformer légèrement en conservant une certaine souplesse.

Cet effet d'adhérence entre la face interne 21 de la paroi 2 et le béton 10 peut d'ailleurs être augmenté en faisant subir un traitement adéquat à cette face 21 de la paroi 2.

On sait, par exemple, que, à la fin du laminage, il est possible, dans un traitement de surface ou un laminage dit de "skin pass", de donner à la tôle une qualité de surface particulière, par exemple en réalisant de légères stries permettant d'augmenter l'adhérence.

Selon une variante, l'épaisseur e1 pourrait encore être diminuée en réalisant également la nappe d'armature supérieure sous forme d'une paroi mince continue recouvrant la face supérieure 12 de la dalle.

Comme la nappe d'armature n'est plus recouverte de béton, elle se trouve au contact du milieu extérieur et peut donc s'oxyder si elle est en métal. Toutefois, la paroi mince 2 étant apparente, il est facile de vérifier son état et, éventuellement, d'y remédier, par exemple par un traitement de protection. En revanche, dans une pièce en béton armé classique, les barres d'armatures sont cachées, précisément, par le béton d'enrobage et leur état d'oxydation apparaît souvent trop tard, lorsque le béton commence à éclater.

D'ailleurs, du fait que la paroi 2 est placée à l'extérieur, on peut la recouvrir d'un revêtement protecteur, comme une peinture, ou bien utiliser des tôles galvanisées ou en métal inoxydable.

En effet, l'invention apporte de tels avantages, par la réduction de la quantité de béton utilisée et par l'utilisation de la nappe d'armature comme coffrage perdu et peau de protection et/ou d'étanchéité, qu'il sera souvent rentable de réaliser celle-ci en acier inoxydable, d'autant plus que la répartition des efforts de traction sur toute la largeur de la paroi mince 2, c'est-à-dire, éventuellement, sur toute la largeur de l'élément 1, permet d'obtenir la section transversale nécessaire avec une très faible épaisseur.

De même, en raison des avantages apportés, il peut être rentable d'utiliser des aciers à haute limite élastique.

Dans ce cas, il est avantageux, également, de réaliser en un métal de même nature, par exemple en acier inoxydable, les bandes 31 et 32 constituant la nappe d'armature supérieure et les bandes ondulées 30 constituant l'armature interne. En effet, la soudure de métaux de même nature s'effectue plus facilement, éventuellement par simple contact électrique et la réalisation de la nappe supérieure en bandes de métal inoxydable permet de réduire encore l'épaisseur d'enrobage le long de la face supérieure 12 de la dalle.

L'invention a été décrite à titre d'exemple dans le cas d'une dalle mais peut s'appliquer, évidemment, à toutes sortes de pièces, par exemple des poutres ou des coques incurvées. D'ailleurs, comme indiqué plus haut, les bandes ondulées 3 ne sont pas nécessairement soudées sur tous leurs sommets. En particulier, on pourrait supprimer les soudures des sommets supérieurs 35, ce qui permettrait de donner à la paroi mince 2 la courbure d'une coque incurvée.

Il est ainsi possible de réaliser des coques de toute nature, la paroi mince 2 pouvant, en cas de besoin, présenter un profil gauche obtenu par un emboutissage.

Dans la mesure où la paroi mince 2 recouvrant l'élément 1 constitue à la fois une nappe d'armature et une peau de protection, il est particulièrement avantageux de réaliser de la sorte la paroi d'un réservoir constituée d'une série de panneaux préfabriqués comprenant chacun une paroi résistante en béton armé recouverte, sur sa face interne d'une feuille d'étanchéité.

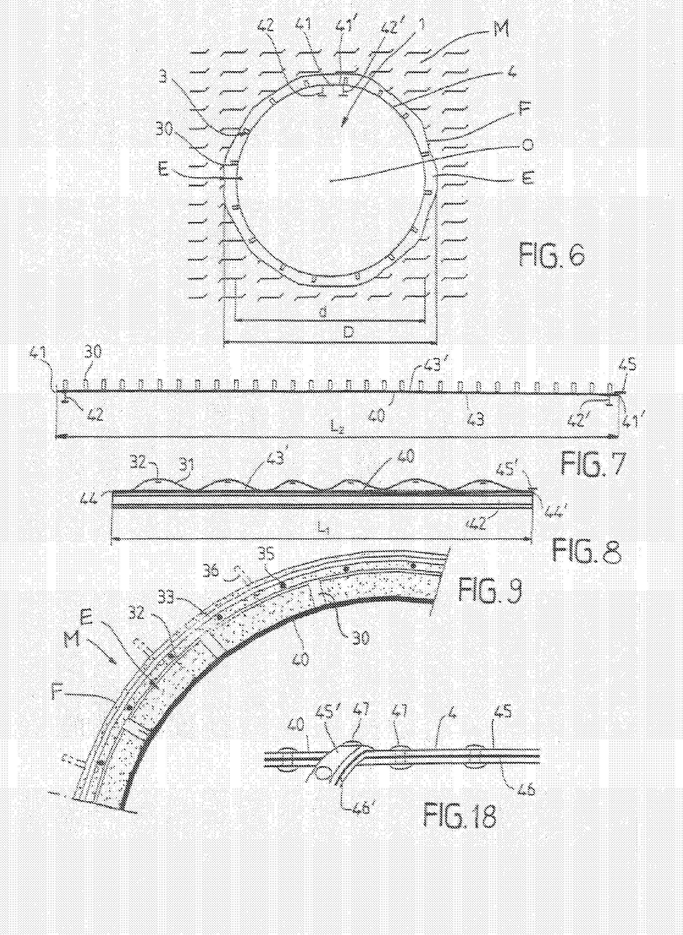

La figure 3 est une vue partielle, en coupe, de la paroi d'un réservoir ainsi réalisé, comportant une série de panneaux adjacents A1, A2 constitués chacun d'un élément préfabriqué 1 ayant une face interne 11 recouverte d'une feuille d'étanchéité 2.

Un tel procédé a été décrit en détail dans la demande internationale de brevet WO 02/066770 du même inventeur.

Dans la disposition antérieure, chaque panneau préfabriqué en béton est réalisé, de façon classique afin de résister par lui-même aux efforts appliqués et, en particulier, à la pression du fluide contenu alors que la feuille qui le recouvre est prévue simplement pour assurer l'étanchéité et peut donc être très mince puisqu'elle ne subit aucun effort.

Dans l'invention, en revanche, la feuille d'étanchéité 2 qui recouvre chaque panneau 1, constitue une nappe d'armature et son épaisseur doit donc être déterminée en fonction des efforts à supporter.

Comme le montre la figure 3, la cage d'armature 3 noyée dans le béton 10 comprend donc deux nappes d'armature reliées entre elles par des bandes ondulées 30, respectivement une première nappe constituée de la paroi 2 recouvrant la face interne 11 de l'élément 1 et une seconde nappe s'étendant le long de la face externe 12 et constituée de deux séries de bandes, respectivement longitudinales 31 et transversales 32.

Dans l'exemple représenté sur la figure 3, ce sont les bandes transversales 32 qui sont placées à l'extérieur de la cage 3 et séparées de la face externe 12 du panneau par une distance minimale d'enrobage d qui peut être réduite en raison de l'utilisation comme armature, de bandes plates.

Selon une disposition déjà décrite dans la demande de brevet WO 02/066770 du même inventeur, les côtés des parois 2 recouvrant les faces internes 11 de deux panneaux consécutifs A1, A2 sont repliés de façon à recouvrir les côtés latéraux desdits panneaux et sont prolongés vers l'extérieur par des parties 22 appliquées l'une sur l'autre avec interposition d'un joint d'étanchéité 23.

Il peut être avantageux, cependant, de laisser un espace libre, par exemple de 3 ou 4 cm entre deux panneaux consécutifs A1, A2 afin de pallier aux dilatations et à de légers tassements différentiels. Dans ce cas, représenté sur la figure 4, les deux feuilles métalliques 2, 2' recouvrant respectivement les faces internes 11 de deux panneaux consécutifs A1, A2 sont prolongées, de chaque côté, par des parties latérales 24, 24' soudées entre elles ou bien reliées avec interposition d'un joint d'étanchéité, afin de réaliser une peau d'étanchéité continue. En effet, leur épaisseur étant déterminée pour jouer le rôle d'une nappe d'armature participant à la résistance, les parties 24 soudées entre elles peuvent résister à la pression du liquide contenu dans le réservoir, au niveau de l'espace 13 entre deux panneaux consécutifs A1, A2.

Une telle disposition laisse une certaine souplesse à la paroi du réservoir et lui permet de s'adapter à de légers désordres dus aux tassements différentiels, aux dilatations et, mêmes, à des séismes.

De préférence, un tel réservoir sera enterré au moins partiellement, le remblai placé à l'extérieur permettant d'équilibrer la poussée de l'eau ou d'un autre fluide contenu dans le réservoir. Cependant, les caractéristiques des panneaux, de la paroi 2 qui les recouvre et des bandes plates constituant la cage d'armature 3 seront déterminées de façon à donner au réservoir une structure lui permettant de résister à la poussée de l'eau avant remblai, par exemple pour un essai d'étanchéité et, inversement, à la poussée des terres et de la nappe phréatique, appliquée de l'extérieur sur le réservoir vide.

Par ailleurs, les panneaux seront, de préférence, préfabriqués en usine et transportés sur le site. Pour cela, ils pourront avoir une hauteur de l'ordre, par exemple, de 4 à 6 m et une largeur limitée à 2,5 m pour respecter le gabarit routier. Chaque panneau pourra, avantageusement, être muni de nervures de raidissement 16, la cage d'armature étant adaptée en conséquence.

Un tel réservoir peut avoir une forme circulaire ou rectangulaire. Dans le cas d'une forme circulaire, les panneaux pourront être incurvés et, de préférence, munis, sur leurs côtés latéraux de parties mâle et femelle formant rotule, de façon à standardiser le panneau quelque soit le diamètre du réservoir. On peut aussi utiliser des panneaux plans fixés latéralement sur des montants verticaux.

Dans le cas d'un réservoir rectangulaire, on peut utiliser des panneaux plans et des panneaux d'angle 17 réalisés, par exemple, en équerre.

L'invention permet, également, la réalisation de conduites de transport de fluides, en particulier, d'eau potable si la paroi de revêtement est constituée en acier inoxydable.

La figure 5 est une vue partielle, en coupe transversale, d'une telle conduite comportant une paroi de revêtement interne 2, de préférence de section circulaire, qui constitue une première nappe d'armature reliée par des bandes ondulées 30, à une seconde nappe constituée de barres longitudinales 31, parallèles à l'axe de la conduite et de barres transversales 32 placées dans des plans perpendiculaires à l'axe et constituant des cerces circulaires parallèles à la face externe 12 de la conduite et séparées de celle-ci par une distance minimale d'enrobage d. Les barres ondulées 30 ont avantageusement la forme de sinusoïdes et sont disposées en étoile dans des plans radiaux passant par l'axe de la conduite.

Comme précédemment, l'épaisseur globale (e1) de la conduite 1 et les caractéristiques de la paroi interne 2 et des bandes plates constituant la cage d'armature 3 sont déterminées en fonction des efforts à supporter. Il est à noter, en particulier, que la conduite est particulièrement adaptée au transport de fluide sous pression, la paroi 2 étant alors simplement soumise à des efforts de traction auxquels une paroi métallique cylindrique résiste particulièrement bien. Le risque de fissuration du béton 10 est diminué, les efforts de traction étant encaissés par la paroi cylindrique 2.

Mais la cage d'armature 3 comportant la paroi interne 2, la nappe externe 31, 32 et les bandes ondulées 30 peut aussi être calculée de façon à résister aux efforts appliqués de l'extérieur par un remblai lorsque la conduite est enterrée et n'est pas soumise à une pression interne permettant de compenser la charge du remblai. De même, en raison de l'utilisation de la paroi interne 2 comme nappe d'armature solidarisée avec le béton 10 par les bandes ondulées 30 et la nappe externe 31, 32, il est possible de réaliser, de cette façon, des tronçons préfabriqués munis, éventuellement, de moyens d'accrochage pour des élingues, la cage d'armature 3 réalisée selon l'invention pouvant être calculée de façon à résister aux efforts engendrés pendant le transport.

Mais l'invention permet aussi de réaliser, de façon particulièrement avantageuse, le cuvelage d'une galerie de transport d'eau, en particulier pour la rénovation d'un aqueduc existant.

Sur la figure 6, on a représenté schématiquement, en coupe transversale, une galerie G réalisée, pour le transport de l'eau à l'intérieur d'un massif M qui peut être un terrain compact ou rocheux lorsque la galerie est réalisée en tunnel, ou bien un massif en maçonnerie, par exemple en meulière ou en briques. De façon classique, une telle conduite pour le transport d'eau potable présente généralement une section fermée pour éviter les risques de pollution et d'évaporation de l'eau.

La galerie G est donc limitée par une face interne F ayant une section transversale quelconque mais, généralement, circulaire, comme indiqué sur le dessin, ou bien par exemple, ovoïde. Même lorsque le massif de support entourant la galerie est réalisée en maçonnerie, la face interne F est relativement irrégulière et, en outre, plus ou moins perméable. Cette face F doit donc être recouverte d'un enduit ou crépi lisse et étanche afin de permettre l'écoulement de l'eau sans perte de charge et sans fuite, cet enduit devant, en outre, être adapté au transport d'eau potable.

Dans cette application particulière de l'invention, cet enduit est remplacé par une paroi mince métallique 4, de préférence en acier inoxydable.

En effet, il est particulièrement avantageux, pour un aqueduc, d'utiliser, pour le revêtement, un tel métal qui est le plus approprié pour le transport de l'eau car il est totalement neutre et résiste parfaitement à la corrosion. En outre, des feuilles en acier inoxydable, même au contact de l'eau, restent brillantes et lisses et permettent donc un écoulement facile avec peu de remous et de perte de charge.

Certes, un tel métal est relativement onéreux mais, fabriqué et livré en grande quantité, son coût reste relativement limité, et il est donc apparu que, compte tenu des très grands avantages apportés par un tel revêtement en acier inoxydable, en particulier, un meilleur écoulement de l'eau et une résistance à la corrosion et aux salissures qui permet de simplifier l'entretien et le nettoyage et d'allonger considérablement la durée de vie du revêtement, l'utilisation d'un acier inoxydable pouvait être, finalement, plus économique qu'un enduit classique en mortier qui doit, lui-même, être recouvert d'un revêtement suffisamment étanche, résistant à l'usure et compatible avec le transport de l'eau. En outre, du fait que la paroi mince constitue à la fois le revêtement de protection et la nappe d'armature, son coût s'impute également en déduction de celui des armatures internes qu'elle remplace, ce qui justifie encore l'intérêt économique de l'invention.

Le diamètre (d) de la paroi de revêtement 4 est un peu inférieur au diamètre (D) de la galerie de façon à laisser, entre la paroi 4 et la face interne F de la galerie un espace E dans lequel est coulé ou injecté, après la pose de la paroi 4, un produit de scellement tel qu'un mortier de ciment ou un béton de granulométrie assez fine pour remplir tout l'espace E dont l'épaisseur reste, évidemment assez faible, normalement inférieure à 10 cm.

La paroi de revêtement 4 de la galerie est formée d'une série de tronçons successifs constitués chacun d'un panneau de paroi mince de forme sensiblement rectangulaire, enroulé autour d'un axe longitudinal O.

Selon l'invention, cette paroi de revêtement 4 constitue une nappe d'armature et son épaisseur est donc déterminée, compte tenu de la limite élastique de l'acier inoxydable, de façon à résister aux efforts prévisibles. Habituellement, un aqueduc fonctionne à écoulement libre et n'est donc pas sous pression mais l'invention permet, précisément, de fonctionner sous une pression interne de l'ordre de 1 ou 2 bars, ce qui permet d'augmenter le débit.

Par ailleurs, la galerie G peut être soumise à une pression externe, par exemple celle d'un remblai ou de la nappe phréatique lorsqu'elle est enterrée. A cet égard, l'utilisation, selon l'invention, d'une paroi métallique résistante pour constituer le revêtement interne de la galerie, permet de résister à des tassements différentiels qui risquent de provoquer des fissurations dans les galeries en maçonnerie.

D'une façon générale, la paroi de revêtement interne, réalisée en tôle inox de qualité alimentaire, pourra avoir une épaisseur de l'ordre de 1 à 1, 5 mm. Le revêtement pourra donc être constitué de plaques minces ayant une largeur correspondant au périmètre de la galerie, par exemple 6m pour une galerie de 2 m de diamètre et une longueur de 4 à 6 m, qui dépend, cependant, du tracé de la galerie, celle-ci pouvant présenter des coudes.

Ces plaques ayant des dimensions supérieures au gabarit de transport, on livrera, normalement, sur le chantier, des bobines ou « coils » d'acier inoxydable, chaque bobine étant déroulée pour découper les plaques constituant les panneaux de revêtement.

Ces plaques seront préparées à plat comme l'indiquent schématiquement les figures 7 et 8 qui montrent la réalisation d'un panneau, respectivement en coupe transversale sur la figure 7 et en coupe longitudinale sur la figure 8.

La longueur L1 d'un panneau (figure 8) peut être égale à la largeur d'une bande livrée en bobine.

Si cette largeur est insuffisante, il est possible de dérouler plusieurs bobines en lés parallèles soudés bord à bord de façon à constituer des plaques ayant la largeur souhaitée, par exemple 5 mètres environ.

D'autre part, du fait que le panneau est découpé sur une bobine déroulée, sa largeur L2 peut être quelconque. Selon l'une des caractéristiques de l'invention, la largeur L2 du panneau sera sensiblement égale ou, seulement, un peu inférieure à la circonférence, en section transversale, de la face interne F de la galerie de façon que, comme le montre la figure 6, après enroulement du panneau autour de son axe longitudinal O, les deux côtés latéraux 41 et 41' du panneau 4, viennent en contact ou se recouvrent légèrement ou, encore, sont recouverts d'un couvre-joint 45 permettant leur emboîtement.

Il est à noter que, sur la figure 6, on a représenté une galerie G à section circulaire mais le profil, en section transversale, de la galerie, pourra être, par exemple, ovoïde, ou, même comporter un fond plat.

D'une façon générale, chaque panneau enroulé aura une forme cylindrique, le terme cylindrique s'appliquant à toute surface réglée à génératrices parallèles à l'axe longitudinal O.

La plaque 40 formant un panneau est ainsi découpée à partir de la bobine d'acier inoxydable et posée sur deux profilés latéraux 42, 42' parallèles à l'axe longitudinal O et ayant une longueur sensiblement égale à la longueur L1 du panneau.

Avantageusement, l'espace E entre le revêtement 4 et la face interne F de la galerie est non seulement rempli d'un produit de scellement mais également renforcé par une armature 3 comprenant, de préférence, une pluralité d' longitudinaux 30 écartés les uns des autres et répartis sur toute la largeur L2 du panneau.

Comme précédemment, ces étriers 30 sont, de préférence, constitués chacun d'une bande métallique ondulée qui peut ainsi être soudée, par les sommets des ondulations, sur la face supérieure 43' du panneau 40 qui, après enroulement du panneau, constituera sa face externe tournée vers l'espace annulaire E. Cependant, ces étriers pourraient aussi être constitués de tronçons de bande séparés, soudés ou collés, par une extrémité, sur la paroi 50 et s'étendant dans l'espace E entre la paroi métallique 40 et la face interne F de la galerie G.

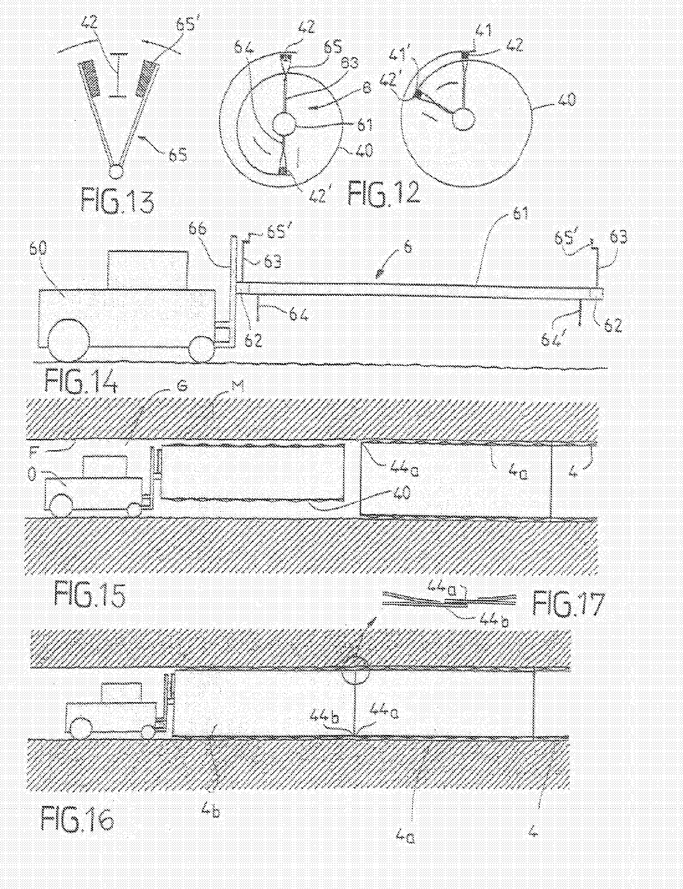

Comme le montrent les figures 7, 8, 9, ces étriers ondulés 30 sont disposés dans des plans parallèles à l'axe longitudinal O de telle sorte que, après enroulement du panneau 40, les soient disposés en étoile, dans des plans radiaux, de la façon indiquée sur la figure 6. L'armature 3 est complétée par des barres transversales 32 qui peuvent être des fers ronds mais sont constituées, de préférence, de bandes plates qui sont enfilées dans les ondulations des étriers 30, au niveau de leurs sommets supérieurs. Chaque barre 32 est fixée seulement sur l'un des étriers de façon à pouvoir coulisser par rapport aux autres étriers lorsque le panneau 40 est enroulé. Ainsi, comme le montre la figure 11, les barres 32 forment des cerces circulaires placées dans des plans transversaux à l'axe longitudinal d'enroulement O du panneau 40.

Par ailleurs, l'armature 3 peut encore être complétée par des barres transversales 33 qui sont cintrées de façon à s'appliquer sur la face interne F de la galerie. Comme le montre la figure 11, les barres 33 peuvent avantageusement être fixées dans le massif de support 10 par des moyens de liaison 36 associés à des écarteurs permettant de régler leur position par rapport à la face interne F de façon à compenser les irrégularités de celle-ci. Chaque barre transversale 33 forme ainsi une sorte de gabarit sur lequel vient prendre appui le panneau 40, lors de son déroulement, par les sommes des étriers ondulés 30.

De préférence, deux bandes métalliques 45, 45' sont fixées sur deux côtés consécutifs perpendiculaires du panneau, par exemple un côté latéral 41' (figure 7) et un côté transversal 44', chaque bande 45, 45' étant fixée sur une moitié de sa largeur de façon à dépasser du panneau pour former un couvre-joint permettant de fixer bord à bord les deux côtés latéraux 41, 41' d'un même panneau ou bien les bords transversaux adjacents de deux tronçons consécutifs.

Après la pose des profilés latéraux 42, 42' et des armatures, le panneau 40 ainsi réalisé peut être enroulé de la façon représentée schématiquement sur la figure 10. A cet effet, on utilise un outil d'enroulement 5 comprenant par exemple deux plateaux circulaires 51 tournant autour d'un axe 52 et sur lesquels peuvent être fixés les extrémités de l'un des profilés 42'. Par rotation des plateaux 51 autour de leur axe 52, on enroule ainsi le panneau 40 autour de l'axe 52 de plus d'un tour de façon à former un panneau « surroulé » représenté schématiquement sur la figure 13, dont le diamètre d' est largement inférieur au diamètre D de la galerie.

Ce panneau surroulé peut ainsi être introduit dans la galerie, de la façon qui sera décrite plus loin puis déroulé, afin de réaliser la paroi cylindrique, les deux profilés 42, 42' étant côte à côte et les côtés 41, 41' étant en contact.

Pour la mise en place et le déroulement d'un panneau surroulé, on utilise avantageusement un outil de déroulement du type représenté sur les figures 14, 15, 16.

D'une façon générale, cet outil de déroulement 6 comporte un arbre central 61 monté rotatif autour de son axe sur deux paliers 62 fixes en rotation et portant chacun deux bras écartés 63, 63', l'arbre rotatif 61 portant également un bras 64, 64' à chaque extrémité.

Chaque paire de bras est munie d'un organe de serrage 65 représenté schématiquement sur la figure 15 et comportant deux mâchoires articulées autour d'un axe et munies de parties d'appui 65' conformées de façon à venir se serrer de part et d'autre d'un profilé latéral 42 ou 42'.

Après enroulement du panneau 40 au moyen de l'outil d'enroulement 5, le panneau est maintenu provisoirement dans la position surroulée représentée sur la figure 11, par exemple par une ou deux ceintures extérieures non représentées.

L'outil de déroulement 6 est alors enfilé axialement à l'intérieur du panneau surroulé 40. A cet effet, il est particulièrement avantageux de monter l'outil de déroulement 6 sur un chariot de transport tel qu'un chariot élévateur 60 muni à une extrémité avant d'un cadre orientable sur lequel, habituellement, est monté coulissant verticalement un châssis de levage 66 comportant deux bras formant une fourche. Selon l'invention, il est avantageux d'utiliser, comme moyen de transport, un chariot élévateur 60 de ce type en remplaçant la fourche de levage par l'outil de déroulement 6 dont l'arbre central 61 est fixé sur le châssis de levage coulissant 66 et s'étend en porte à faux vers l'avant.

L'outil de déroulement 6 ainsi porté par le chariot 60 peut être enfilé axialement à l'intérieur du panneau surroulé 40. L'écartement des bras 63, 63' montés sur les paliers 62 et fixes en rotation est un peu supérieur à la longueur L1 d'un panneau de façon que les mâchoires de serrage 65' portées par les deux bras 63, 63' puissent s'engager, respectivement sur les deux extrémités de la poutre latérale 42 placée sur le côté externe du panneau surroulé 40. Pour faciliter l'enfilement du panneau et sa prise en charge, le bras fixe 65' placé à l'extrémité avant de l'arbre rotatif 61 peut, d'ailleurs, être articulé autour d'un axe orthogonal à l'axe horizontal de l'arbre 61.

Les deux bras 64, 64' montés sur l'arbre rotatif 61 sont, en revanche, écartés d'une distance inférieure à la longueur L1 du panneau 40 et leur longueur est réglée de façon que les mâchoires 65 placées à leurs extrémités puissent s'engager sur le profilé 42' disposé à l'intérieur du panneau surroulé. Ce dernier est ainsi pris en charge par l'outil de déroulement de la façon représentée schématiquement sur la partie gauche de la figure 15.

Il est à noter qu'un chariot élévateur peut avoir des dimensions assez réduites et que, en particulier, son encombrement en hauteur dépend de l'amplitude de levage. Or, dans le cas de l'invention, cette amplitude est faible. Par conséquent, l'outil de déroulement 6 peut être monté sur un chariot de dimensions compatibles avec celles de la galerie à revêtir afin d'être introduit à l'intérieur de celle-ci de la façon représentée sur les figures 15 et 16.

Comme on l'a indiqué plus haut, en effet, un aqueduc présente généralement une longueur très importante de plusieurs dizaines de kilomètres et, grâce à l'invention, il est possible de ménager dans le massif de support des orifices de dimensions suffisantes pour introduire dans la galerie un chariot élévateur 60 et/ou un panneau surroulé, le chariot venant prendre appui, par des organes de roulement, sur la partie inférieure de la face interne F de la galerie. L'orifice d'introduction peut donc être ménagé à une assez grande distance du lieu de mise en place du revêtement et le chariot 60 portant l'outil de déroulement 6 et le panneau surroulé, se déplace axialement à l'intérieur de la galerie jusqu'à la position de pose représentée sur la figure 16. Etant donné que le revêtement est constitué de tronçons élémentaires mis bout à bout, le chariot 60 restera, de préférence, à l'intérieur de la galerie, les panneaux surroulés étant introduits l'un après l'autre dans la galerie par l'orifice ménagé dans le plafond de celle-ci.

La figure 15 montre donc schématiquement un aqueduc constitué d'une galerie G ménagée à l'intérieur d'un massif de support M et dans lequel a déjà été réalisé un revêtement 4, par tronçons successifs, jusqu'à un bord transversal 44a ménagé à l'extrémité arrière du dernier tronçon 4a du revêtement 4, dans un plan perpendiculaire à l'axe de la galerie.

Le chariot de transport 60 se trouvant à l'intérieur de la galerie, on introduit dans celle-ci un nouveau panneau surroulé 40 que l'on enfile sur l'outil de déroulement 6 qui le prend en charge. Le chariot est alors avancé jusqu'à la position représentée sur la figure 15 pour laquelle le nouveau panneau 40 est placé sensiblement dans sa position de pose, dans le prolongement du dernier tronçon 4a du revêtement 4 déjà réalisé.

On commande alors la rotation des bras mobiles 64 qui détermine le déroulement du panneau 40 de la façon indiquée sur la partie droite de la figure 12, jusqu'à ce que le profilé interne 42' dépasse la position du profilé externe 22. Comme indiqué plus haut, le profil du panneau déroulé peut être déterminé avec une certaine précision par les barres transversales 33 qui forment un gabarit, ce profil n'étant, d'ailleurs, pas nécessairement circulaire.

On se trouve alors dans la position représentée sur la figure 16 et l'on peut procéder à la jonction étanche des bords en vis à vis du panneau 40 respectivement le long des deux côtés latéraux 41, 41' du nouveau tronçon 4b ainsi posé ainsi que des côtés transversaux adjacents, respectivement 44a à l'extrémité arrière du dernier tronçon de revêtement 4a déjà posé et 44b à l'extrémité avant du nouveau tronçon 4b.

Comme le montre la vue de détail de la figure 17, les deux extrémités 44a, 44b peuvent simplement s'enfiler l'une dans l'autre et être soudées par contact. Pour faciliter l'emboîtement des extrémités adjacentes, il peut être avantageux de donner à chaque panneau au moment de l'enroulement, une forme légèrement tronconique, l'extrémité avant 44b ayant un diamètre un peu inférieur à celui de l'extrémité arrière 44a. Dans ce cas, les côtés latéraux 41, 41' du panneau 40 ne sont pas rigoureusement parallèles, le panneau étant légèrement trapézoïdal.

Dans la mesure où tous les éléments du revêtement sont métalliques, il est possible et avantageux de réaliser des jonctions soudées et, pour cela, non seulement la paroi de chaque panneau 40 du revêtement mais également tous les autres éléments tels que les armatures 3 et les profilés 42, 42', sont réalisés en acier inoxydable, l'utilisation de métaux de même nature facilitant le soudage. En outre, comme l'acier inoxydable présente l'avantage d'une très longue durée et d'un entretien facile, il est préférable de réaliser également en acier inoxydable toutes les armatures de façon à augmenter la longévité du revêtement en évitant les risques de corrosion.

Par ailleurs, il est avantageux de réaliser la jonction des bords en regard des parois de revêtement par des soudures qui assurent non seulement la résistance mais également l'étanchéité et permettent de résister à des pressions internes ou externes de l'ordre de 3 bars. Toutefois, les jonctions peuvent également être collées, rivetées ou boulonnées, par exemple de la façon représentée sur la figure 20.

En effet, comme on l'a déjà exposé en se référant à la figure 8, la jonction entre les bords latéraux d'un panneau peut être assurée au moyen d'un couvre-joint 45 associé à un joint d'étanchéité. Une disposition analogue utilisant un couvre-joint circulaire 45' et un joint 46' peut être utilisée pour réaliser la jonction entre les extrémités adjacentes 44a, 44b du tronçon déjà posé 4a et du nouveau tronçon 4b.

De préférence, au moins les bras rotatifs 64 de l'outil de déroulement 6 ont une longueur variable, par exemple au moyen d'un montage télescopique actionné par un vérin et peuvent donc appliquer le nouvel élément contre la face F de la galerie G au fur et à mesure de son déroulement. De même, du fait que les extrémités, respectivement arrière 44a et avant 44b, des deux tronçons consécutifs sont emboîtées l'une dans l'autre, il est possible, au fur et à mesure que le nouveau tronçon 4b se plaque circulairement sur le tronçon précédent 4b, de perforer des trous dans le tronçon 4a déjà posé en passant à travers l'extrémité 44b du tronçon 4b à poser et en traversant le joint collé 46'. Au fur et à mesure du déroulement, des rivets inox sont posés afin de plaquer le nouveau tronçon 4b et son joint collé contre le tronçon précédent 4. Ce perçage et ce serrage progressif permettent à la tôle inox du tronçon à poser 4b de se mettre en place en s'adaptant à la compression du joint par les rivets. Lorsque tous les rivets de la jonction circulaire du nouveau tronçon 4b sur le tronçon précédent 4a ont été mis en place, l'écartement des deux profilés en clé de voûte du nouveau tronçon est vérifié, et, au besoin corrigé.

La jonction de l'étanchéité entre le joint circulaire et le joint longitudinal peut être réalisée de façon classique.

Lorsque l'aqueduc est en écoulement libre, il est possible de laisser en place les profilés latéraux 42, 42' qui ont servi à l'enroulement et au déroulement et peuvent être placés à la partie supérieure de la conduite. Cependant, il est souvent nécessaire de donner à la conduite une face interne entièrement lisse, en particulier, en cas d'écoulement sous pression. Dans ce cas, il faut retirer les profilés latéraux 42, 42' et il est donc préférable que ceux-ci soient fixés par des boulons.

Par ailleurs, la galerie n'est pas toujours rectiligne et il est parfois nécessaire de ménager des coudes. A cet effet, la jonction entre deux conduites ayant des axes décalés angulairement pourra être effectuée au moyen d'un coude réalisé en usine selon la technique dite des « tranches de melon » utilisée, par exemple, pour la réalisation d'oléoducs. Les éléments seront assemblés et rivetés entre eux sur le site de la façon indiquée plus haut.

Le produit de scellement remplissant l'espace E entre le revêtement 2 et la face interne 11 de la galerie peut être injecté après la pose de plusieurs tronçons consécutifs. A cet effet, des trous d'injection sont percés en usine à une extrémité basse de chaque tronçon et des trous d'évent sont ménagés à l'extrémité haute opposée. Le matériau injecté peut être par exemple un coulis de micro-béton à 400 kg très plastique. Après ouverture de tous les trous d'injection et des évents, ce coulis de béton est injecté par l'extrémité basse et l'injection est poursuivie jusqu'à apparition du coulis par le trou d'évent haut qui est alors fermé ainsi que les points d'injection bas.

Il est à noter, à cet égard, que l'utilisation, selon l'invention, d'une paroi métallique de revêtement formant également une nappe d'armature interne solidarisée avec le produit de scellement 10 par les bandes ondulées 30 permet, le cas échéant, de calculer la cage d'armature ainsi formée de façon que celle-ci résiste par elle-même aux différentes contraintes et, en particulier, à une pression interne ou externe.

La technique qui vient d'être décrite permet de renouveler de façon rapide et économique le revêtement d'un aqueduc existant mais pourrait aussi être utilisée avantageusement pour la construction d'un nouvel aqueduc. Dans ce cas, le revêtement pourrait être réalisé peu de temps après la construction de la galerie, le chariot de transport 60 étant alors introduit simplement par l'extrémité ouverte de celle-ci.

Comme indiqué plus haut, les panneaux 40 munis de leurs profilés 42 et des armatures 31, 32 peuvent être réalisés à plat, à partir d'une bobine d'acier inoxydable.

Les panneaux ainsi réalisés peuvent aussi être transportés à plat avant surroulage. Dans ce cas, leurs dimensions doivent respecter le gabarit routier.

Pour éviter de poser un trop grand nombre d'éléments, il est possible, comme on l'a indiqué plus haut, de réaliser des panneaux formés de plusieurs lés adjacents afin de réaliser des éléments ayant une longueur, par exemple, de 5 mètres environ, les panneaux étant alors transportés dans leurs positions surroulées représentées sur la figure 13. Par exemple, un semi-remorque pourrait ainsi transporter 8 panneaux surroulés de 5 mètres de long.

Un tel panneau surroulé peut avoir un poids unitaire de 400 à 500 kg environ, ce qui correspond à la capacité de levage d'un petit chariot élévateur de type classique.

Bien entendu, l'invention ne se limite pas aux détails des modes de réalisation décrits précédemment à titre de simples exemples mais couvre au contraire, des variantes utilisant, par exemple, des moyens équivalents, ou bien d'autres applications de cette technique.

Par exemple, comme on l'a déjà indiqué, l'invention a été décrite dans le cas d'une dalle, en se référant aux figures 1 et 2, mais elle peut s'appliquer à d'autres types de pièces telles que des poutres ou des coques incurvées, les deux parois externes 11 et 12 n'étant pas, nécessairement, parallèles. D'autre part, l'armature interne 3 soudée sur la paroi métallique 2 qui constitue la nappe d'armature externe, pourrait être réalisée de façon différente.

En outre, selon une technique décrite précédemment dans le brevet français 0350857 du même inventeur, il pourrait être avantageux de ménager, à l'intérieur de la pièce, des zones de blocage écartées et, entre celles-ci, une zone de glissement dans laquelle la partie correspondante de l'armature constituée, dans l'invention, de la paroi de revêtement 2, est libre de s'allonger sur toute sa longueur sous l'effet des efforts absorbés, ce qui permet de réaliser des pièces particulièrement souples sans risque de fissuration du béton.

D'autre part, même si l'utilisation, selon l'invention, de la paroi de revêtement comme coffrage perdu et nappe d'armature principale, facilite la réalisation et le transport de pièces fabriquées à l'avance, la technique selon l'invention ne se limite pas à la réalisation de pièces préfabriquées.

En effet, la paroi 2 constituant un coffrage perdu et ayant, avec les bandes ondulées 30, une certaine rigidité on pourrait par exemple, pour réaliser un mur, poser deux parois verticales écartées en alternant les bandes ondulées pour permettre leur imbrication et couler dans cet espace du béton selon une technique analogue à celle du béton banché.

## Revendications

1. Elément de construction constitué d'un panneau en béton armé (1) dans lequel est noyée une armature de renforcement comportant au moins une nappe d'armature principale s'étendant le long d'une face externe tendue (11) de l'élément (1) et sur laquelle est fixée une armature interne (3) de solidarisation avec le béton, s'étendant dans l'épaisseur de l'élément (1), ce dernier étant réalisé, après la pose de l'armature de renforcement, par coulée de béton sur une paroi mince continue (2) formant un coffrage perdu, **caractérisé par le fait que** la paroi mince (2) formant le coffrage perdu, s'étend le long de la face tendue (11) de l'élément (1) et constitue en même temps la nappe d'armature principale de l'élément (1), la nature et l'épaisseur de ladite paroi mince (2) étant déterminées de façon à résister aux contraintes de traction engendrées par les efforts appliqués sur l'élément (1) sans risque de décollement du béton.

2. Elément de construction selon la revendication 1, **caractérisé par le fait que** la paroi mince (2) formant la nappe d'armature principale recouvre entièrement la face externe tendue (11) de la pièce (1), de façon à constituer une peau d'étanchéité continue.

3. Elément de construction selon l'une des revendications 1 et 2, **caractérisé par le fait que** la paroi mince (2) est réalisée en un métal, de préférence inoxydable.

4. Elément de construction selon l'une des revendications 1, 2, 3, **caractérisé par le fait que** la paroi mince (2) est recouverte d'un revêtement résistant à la corrosion.

5. Elément de construction selon l'une des revendications 1 et 2, **caractérisé par le fait que** la paroi mince (2) est réalisée en une matière à base de fibres de verre ou de carbone.

6. Elément de construction selon l'une des revendications précédentes, **caractérisé par le fait que** l'armature interne (3) est constituée d'une pluralité de bandes minces (30) ayant une partie soudée sur une face interne de la paroi mince (2) et une partie s'étendant dans l'épaisseur de l'élément (1).

7. Elément de construction selon la revendication 6, **caractérisé par le fait que** la nappe d'armature principale en forme de paroi mince (2) et l'armature interne (3) en forme de bandes (30) sont constituées en un même matériau.

8. Elément de construction selon la revendication 7, **caractérisé par le fait que** l'armature interne (3) comporte une pluralité de bandes minces ondulées (30) s'étendant suivant des directions sensiblement parallèles, chaque bande (30) présentant une série d'ondulations et étant solidarisée avec la face interne (21) de la paroi mince (2) sur au moins une partie des sommets desdites ondulations.

9. Elément de construction selon l'une des revendications précédentes, **caractérisé par le fait qu'**il comporte deux nappes d'armatures reliées par une armature interne (3), respectivement une première nappe constituée d'une paroi mince continue (2) et une seconde nappe constituée d'une pluralité de bandes minces (31, 32) enrobées dans le béton (10).

10. Procédé de réalisation d'un revêtement étanche dans une galerie maçonnée ou creusée dans le terrain naturel, ledit revêtement comportant une paroi mince (2) introduite à l'intérieur de la galerie (G) et séparée de la face interne (F) de celle-ci par un espace (E) dans lequel est injecté une matière moulable résistante telle que du béton, dans laquelle est noyée une armature interne de solidarisation, **caractérisé par le fait que** les caractéristiques dimensionnelles et structurelles de la paroi mince (2) et de l'armature interne (3) sont déterminées de façon que l'ensemble du revêtement soit capable de résister aux efforts appliqués résultant des poussées externes, de la pression en service et de tassements différentiels éventuels de la galerie (G).

11. Procédé de réalisation d'un revêtement de galerie selon la revendication 10, **caractérisé par le fait que** l'armature interne (3) est constituée d'une pluralité de bandes ondulées (30) parallèles à l'axe longitudinal (0) de la conduite et réparties autour de celui-ci, lesdites bandes (30) étant soudées par au moins certains des sommets des ondulations sur la face interne (21) de la paroi mince (2).

12. Procédé de réalisation d'un revêtement d'une galerie (G) selon la revendication 11, **caractérisé par le fait que** le revêtement est constitué de tronçons successifs (4a, 4b) comportant chacun un panneau (40) de paroi mince rectangulaire ayant une longueur correspondant à la longueur du tronçon et une largeur correspondant au périmètre de la conduite en section transversale, que ce panneau (40) est d'abord posé à plat pour placer sur une face supérieure (43') une armature interne (3) comportant au moins une pluralité de bandes ondulées (30) parallèles à un axe longitudinal du panneau et écartées l'une de l'autre, lesdites bandes (30) étant soudées sur la face supérieure (43') du panneau (40) par au moins certains des sommets des ondulations, que le panneau (40) est ensuite surroulé pour former un tube de diamètre global inférieur à celui de la galerie (G), les bandes ondulées (30) étant tournées vers l'extérieur, que le panneau surroulé (40) est introduit dans la galerie (G) jusqu'à l'emplacement de pose et est déroulé de façon à prendre appui sur la face latérale (F) de la galerie (G) par les sommets des bandes ondulées (30) ledit panneau (40) étant soudé, d'une part le long de deux côtés longitudinaux (41, 41') venus en contact et d'autre part, le long d'un côté transversal extrême (44b), avec le côté extrême correspondant (44a) du dernier tronçon (4a) déjà posé, et qu'une matière moulable (10) telle que du béton est injectée dans l'espace (E) entre la paroi mince (2) et la face latérale (F) de la galerie (G), afin de noyer l'armature interne (3) et de solidariser l'ensemble.

13. Procédé de réalisation d'un revêtement de galerie selon la revendication 12, **caractérisé par le fait que** le panneau (40) est surroulé au moyen d'un outil d'enroulement (5) comprenant deux plateaux circulaires (51) tournant autour d'un axe (52), sur lesquels sont fixées les extrémités d'un profilé (42) ménagé sur l'un des cotés longitudinaux du panneau (40) qui est enroulé sur plus d'un tour par rotation des plateaux 51 autour de leur axe (52).

14. Procédé selon la revendication 13, **caractérisé en ce que** le panneau surroulé (40) est introduit dans la galerie au moyen d'un outil de déroulement (6) comportant un arbre central (61) portant, à ses extrémités, deux bras mobiles (64, 64') et monté rotatif sur deux paliers fixes en rotation, portant respectivement deux bras écartés (63, 63') dont l'écartement est un peu supérieur à la longueur d'un panneau (40), chaque paire de bras (63, 63') (64, 64') étant munie d'un organe de serrage (65), et que l'outil de déroulement (6) est enfilé dans le panneau surroulé (40) de façon que les organes de serrage (65) portés respectivement par les bras (63, 63') des paliers (62, 62') s'engagent sur les extrémités d'un profilé latéral (42) placé sur le coté externe du panneau surroulé (40) alors que les organes de serrage (65) des bras (64, 64') de l'arbre central (61) s'engagent sur les extrémités d'un profilé (42') placé sur le coté interne du panneau surroulé (40), que ledit panneau (40) est alors placé dans sa position de pose par avancement de l'outil (6) à l'intérieur de la galerie (G) puis est déroulé par rotation des bras mobiles (64, 64') jusqu'à ce que le profilé interne (42') dépasse la position du profilé externe (42), et l'on procède alors à la jonction étanche des bords en vis-à-vis du panneau (40) le long des cotés latéraux (41, 41'), ainsi que des cotés transversaux adjacents, respectivement (44a) du dernier tronçon déjà posé (4a) et (44b) du nouveau tronçon (4b).

15. Procédé selon la revendication 14, **caractérisé par le fait que** l'outil de déroulement (6) est monté sur un chariot de transport (60) tel qu'un chariot élévateur, de dimensions compatibles avec celles de la galerie à revêtir, afin d'être introduit à l'intérieur de celle-ci.
